# EUROPÄISCHE PATENTSCHRIFT

(11) **EP 1 257 755 B1**
(45) Veröffentlichungstag und Bekanntmachung des Hinweises auf die Patenterteilung: **01.06.2005**
(21) Anmeldenummer: 01915215.6
(22) Anmeldetag: 09.02.2001
(51) Int. Cl.: F16K 1/52

(54) **HANDANTRIEB FÜR ABSPERRORGANE**
HAND DRIVE FOR SHUT-OFF MEMBERS
COMMANDE MANUELLE POUR ORGANE D'ARRET

(30) Priorität: 12.02.2000 DE 10006326
(43) Veröffentlichungstag der Anmeldung: 20.11.2002
(73) Patentinhaber: GEMÜ Gebrüder Müller Apparatebau GmbH & Co. KG, 74665 Ingelfingen (DE)
(72) Erfinder: MÜLLER, Fritz, 74653 Ingelfingen (DE); GAIDA, Gregor, 74676 Niedernhall (DE)
(74) Vertreter: Hering, Hartmut, Dipl.-Ing.
(86) Internationale Anmeldenummer: PCT/EP2001/001430
(87) Internationale Veröffentlichungsnummer: WO 2001/059340

(56) Entgegenhaltungen:
- GB-A- 1 064 868
- GB-A- 1 513 503
- US-A- 5 647 397

## Beschreibung

Die Erfindung betrifft einen Handantrieb zum Öffnen und Schließen eines Absperrorganes, insbesondere eines Membranventiles, mit einem Handrad und einer mit einem Ventilelement gekoppelten Gewindespindel, die durch das Handrad axial bewegbar ist. Ein derartiger Handantrieb ist allgemein bekannt, siehe z. B. GB-A-1 064 868.

Der Erfindung liegt die Aufgabe zugrunde, die Schließposition des Ventilelementes und vorzugsweise auch dessen Hub zu begrenzen.

Nach der Erfindung wird hierzu ein Handantrieb zum Öffnen und Schließen eines Absperrorgans bereitgestellt, welcher die Merkmale des Anspruches 1 aufweist.

Bei dem Handantrieb nach der Erfindung sind hierzu in das Handrad integrierte Einrichtungen zur Begrenzung der Schließposition und vorzugsweise auch zur Begrenzung des Hubes des Ventilelementes eingebaut.

Vorzugsweise ist hierbei die Gewindebuchse mit einem Innengewinde versehen, in das axial verstellbar eine weitere Gewindebüchse eingeschraubt ist, die einen radialen Bund aufweist, an welchem der Bund der Gewindespindel zur Begrenzung des Hubes des Ventilelementes axial anschlagbar ist.

Nach einer weiteren Ausgestaltung der Erfindung ist das Handrad mit einer Abdeckkappe für die Gewindebuchsen versehen, und diese Abdeckkappe ist über jeweils einen Vielflach (z.B. einen 12-Kant) drehfest mit dem Handrad und den beiden Gewindebuchsen verbunden, um eine unbeabsichtigte Verdrehung der beiden Gewindebuchsen gegeneinander oder gegen das Handrad zu vermeiden.

Vorteilhafterweise ist das Handrad drehfest mit einer weiteren Gewindebüchse gekoppelt, die in einem Ventilgehäuse gehalten ist und die über ein Gewinde mit der Gewindespindel verbunden ist, wobei das Handrad zwischen dem Ventilgehäuse und der Gewindebuchse axial fixiert ist.

Zweckmäßigerweise ist schließlich mit der Gewindespindel eine Sichtanzeige fest verbunden, wobei der Bund der Gewindespindel an der Sichtanzeige ausgebildet sein kann.

Eine beispielsweise Ausführungsform der Erfindung wird nachfolgend an Hand der Zeichnung erläutert, in der
- Fig. 1: schematisch im Schnitt eine bevorzugte Ausführungsform des erfindungsgemäßen Handantriebes zeigt.

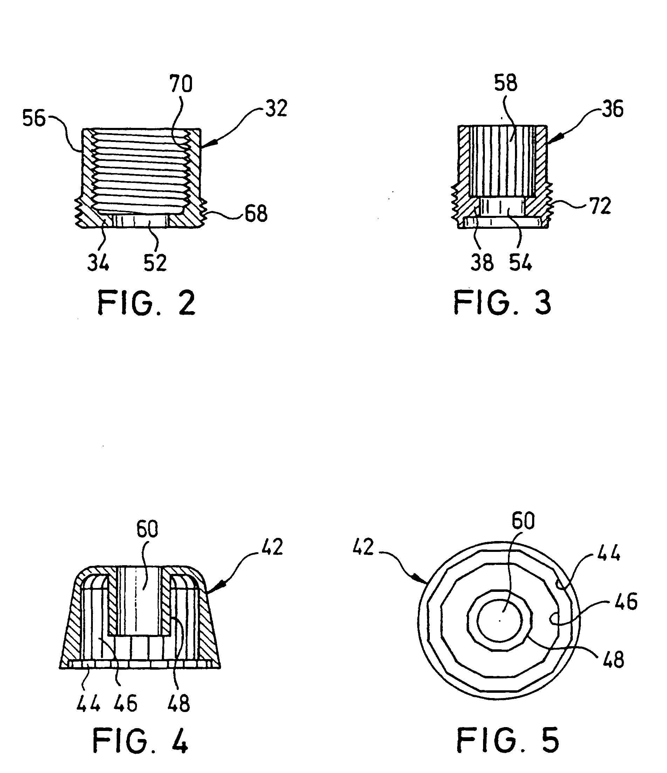

- Fig. 2: zeigt im Schnitt eine Gewindebuchse zur Begrenzung der Schließposition des Ventilelementes.
- Fig. 3: zeigt im Schnitt eine Gewindebuchse zur Begrenzung des Hubes des Ventilelementes.
- Fig. 4 und 5: zeigen im Schnitt bzw. in Ansicht eine Abdeckkappe zur Fixierung der Gewindebuchse nach den Figuren 2 und 3 gegen unbeabsichtigte Verdrehung.

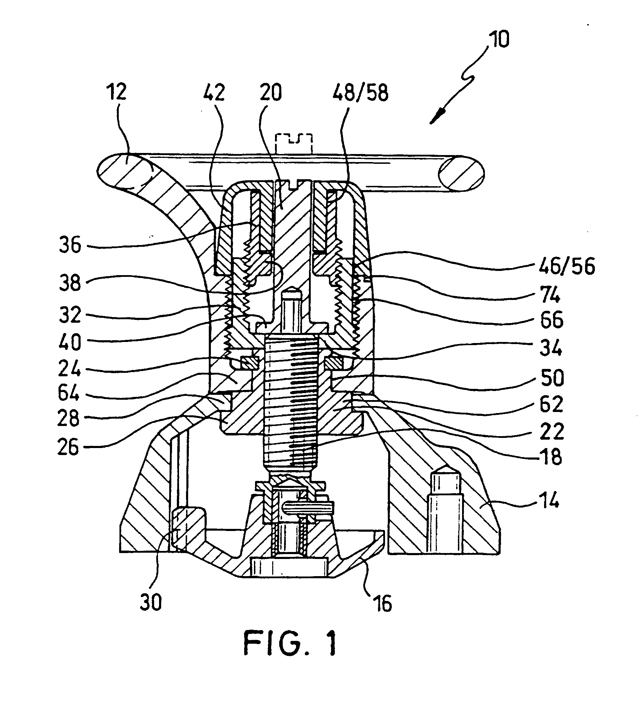

Figur 1 zeigt einen Handantrieb 10 zum Betätigen von Absperrorganen wie zum Beispiel Ventilen.

Der Handantrieb 10 umfaßt ein Handrad 12, das an einem nur teilweise dargestellten Ventilgehäuse 14 axial fixiert angebracht und gehalten ist, wie noch erläutert wird. Im Ventilgehäuse 14 ist ein Ventilelement 16 angeordnet zum Öffnen und Schließen eines nicht dargestellten Ventilsitzes. Das Ventilelement 16 ist geeignet mit einer Gewindespindel 18 verbunden, welche durch das Handrad 12 über eine Gewindebuchse 22 axial in der einen oder anderen Richtung bewegbar ist.

Das Handrad 12 ist hierzu mit der Gewindebuchse 22 drehfest verbunden, zum Beispiel mittels eines Vielfaches 50, der beispielsweise in Form eines 12-Kantes ausgebildet sein kann. Die Gewindebuchse 22 hat ein Innengewinde, welches in ein Außengewinde der Gewindespindel 18 eingreift. Axial ist das Handrad 12 zwischen einer Schulter 62 der Gewindebuchse 22 und einem in einer Ringnut der letzteren sitzenden Haltering 24 gehalten.

Die Gewindebuchse 22 hat ferner einen Flansch 26, der an der Innenseite eines Flansches 28 des Ventilgehäuses 14 anliegt, während das Ende 64 des Handrades 12 an der Außenseite des Flansches 28 des Ventilgehäuses 14 anliegt.

Auf diese Weise ist das Handrad 12 axial am Ventilgehäuse 14 fixiert, so daß es nur eine Drehbewegung, aber keine axiale Bewegung ausführen kann.

Das Ventilelement 16 greift mit einer Nase 30 in eine nicht näher bezeichnete axiale Nut im Ventilgehäuse 14 ein und ist dadurch gegen Verdrehen gesichert.

Das Handrad 12 ist mit einem Innengewinde 66 versehen, in welches eine Gewindebuchse 32, die ein Außengewinde 68 hat, axial verstellbar eingeschraubt ist.

Die Gewindebuchse 32 hat einen radialen, einwärts gerichteten Bund 34, der durch eine zentrale Bohrung 52 begrenzt ist, deren Durchmesser etwas größer ist als der Außendurchmesser der Gewindespindel 18.

Die Gewindebuchse 32 ist ferner mit einem Innengewinde 70 versehen, in welches axial verstellbar eine mit einem Außengewinde 72 versehene Gewindebuchse 36 eingeschraubt ist. Die Gewindebuchse 36 hat einen radialen, einwärts gerichteten Bund 38, der durch eine zentrale Bohrung 54 begrenzt ist.

Die Gewindebuchse 32 ist im Innengewinde 66 des Handrades 12 axial verstellbar und die Gewindebuchse 36 ist im Innengewinde 70 der Gewindebuchse 32 axial verstellbar.

Axial auf der Gewindespindel 18 ist eine Sichtanzeige 20 geschraubt und damit fest mit der ersten verbunden, die sich durch das Handrad 12 hindurch nach außen erstreckt und dazu dient, die Position des Ventilelementes 16 anzuzeigen.

Die Sichtanzeige 20 ist an ihrem sich an die Gewindespindel 18 anschließenden Ende mit einem radialen, auswärts gerichteten Bund 40 versehen. Der Bund 40, der auch direkt an der Gewindespindel 18 ausgebildet ein kann, wirkt, wie noch erläutert wird, bei der Schließbegrenzung mit dem Bund 34 der Gewindebuchse 32 und bei der Hubbegrenzung mit dem Bund 38 der Gewindebuchse 36 zusammen.

Das Handrad 12 ist, wie Figur 1 zeigt, mit einer Abdeckkappe 42 ausgestattet, welche auf das Handrad 12 aufgesetzt ist und die Gewindebuchsen 32 und 36 nach außen abdeckt.

Die Abdeckkappe 42 ist drehfest mit dem Handrad 12 und mit jeder der beiden Gewindebuchsen 32 und 36 verbunden, um ein unbeabsichtigtes Verdrehen der beiden Gewindebuchsen 32, 36 relativ zueinander und relativ zum Handrad 12 mindestens im wesentlichen zu verhindern.

Zur Verbindung mit dem Handrad 12 ist die Abdeckkappe 42 mit einem Innen-Vielflach 44 versehen, zum Beispiel einem Innen-12-Kant, der auf einen entsprechenden Außen-Vielflach 74 des Handrades 12 klemmend aufgesetzt ist.

Die Abdeckkappe 42 hat ferner einen Innen-Vielflach 46, zum Beispiel einen Innen-12-Kant, der in Eingriff mit einem entsprechenden Außen-Vielflach 56 der Gewindebuchse 32 steht.

Schließlich ist die Abdeckhaube 42 mit einem Außen-Vielflach 48 versehen, der in Eingriff mit einem entsprechenden Innen-Velflach 58 der Gewindebuchse 36 steht.

Bei aufgesetzter Abdeckkappe 42 sind somit die Gewindebuchsen 32 und 36 relativ zueinander und relativ zum Handrad 12 gegen unbeabsichtigtes Verdrehen gesichert.

Die Abdeckkappe 42 hat schließlich eine zentrale Bohrung 60, durch welche sich die Sichtanzeige 20 erstreckt.

Die Schließbegrenzung und die Hubbegrenzung für das Ventilelement 16 werden wie folgt eingestellt.

Bei abgenommener Abdeckkappe 42 wird durch Drehen des Handrades 12 zur Einstellung des gewünschten Mindestdurchflusses die hierfür erforderliche Mindestöffnung des Absperrorganes eingestellt. Danach wird die axial verstellbare Gewindebuchse 32 nach oben (bezogen auf Figur 1) gedreht, bis ihr Bund 34 am Bund 40 der Sichtanzeige 20 anschlägt.

(Der Außendurchmesser des Bundes 40 ist entsprechend größer als der Innendurchmesser des Bundes 34.)

Damit ist die Schließbegrenzung des Ventiles bzw. der gewünschte Mindestdurchfluß eingestellt.

Zur Einstellung des Maximal-Durchflusses wird das Handrad 12 so lange gedreht, bis der gewünschte Maximal-Durchfluß erreicht ist. Danach wird die Gewindebuchse 36, welche in der Gewindebuchse 32 axial verstellbar ist, so lange nach unten (bezogen auf Figur 1) gedreht, bis ihr Bund 38 am Bund 40 der Sichtanzeige 20 anschlägt.

(Der Außendurchmesser des Bundes 40 ist entsprechend größer als der Innendurchmesser des Bundes 38.)

Mit dem Anschlag des Bundes 40 am Bund 38 der Gewindebuchse 36 ist der maximale Hub und damit die gewünschte Begrenzung der Gewindespindel 18 bzw. des Ventilelementes 16 eingestellt.

Nachdem diese Einstellungen durchgeführt sind, wird die Abdeckkappe 42 aufgesetzt, wodurch die Positionen der Gewindebuchsen 32 und 36 relativ zueinander und zum Handrad 12 fixiert, das heißt gegen unbeabsichtigtes Verdrehen gesichert werden.

## Patentansprüche

1. Handantrieb zum Öffnen und Schließen eines Absperrorganes, insbesondere eines Membranventiles, mit einem Handrad (12) und einer mit einem Ventilelement (16) gekoppelten Gewindespindel (18), die durch das Handrad axial bewegbar ist, **dadurch gekennzeichnet, daß** das Handrad (12) mit einer Einrichtung zur Begrenzung der Schließposition der Gewindespindel (18) bzw. des Ventilelementes (16) ausgerüstet ist, welche ein Innengewinde (66) am Handrad, in das eine mit einem radialen Bund (34) versehene Gewindebuchse (32) axial verstellbar eingeschraubt ist, und ferner einen radialen Bund (40) an der Gewindespindel (18) umfaßt, an welchem der Bund (34) der Gewindebuchse (32) zur Begrenzung der Schließposition des Ventilelementes (16) axial anschlagbar ist.

2. Handantrieb nach Anspruch 1, **dadurch gekennzeichnet, daß** das Handrad (12) mit einer Einrichtung zur Begrenzung des Hubes der Gewindespindel (18) bzw. des Ventilelementes (16) ausgerüstet ist.

3. Handantrieb nach Anspruch 1 und 2, **dadurch gekennzeichnet, daß** die Gewindebuchse (32) mit einem Innengewinde (70) versehen ist, in welches axial verstellbar eine Gewindebuchse (36) eingeschraubt ist, die einen radialen Bund (38) aufweist, an welchem der Bund (40) der Gewindespindel (18) zur Begrenzung des Hubes des Ventilelementes (16) axial anschlagbar ist.

4. Handantrieb nach einem der vorhergehenden Ansprüche, **dadurch gekennzeichnet, daß** das Handrad (12) mit einer Abdeckkappe (42) für die Gewindebuchsen (32, 36) versehen ist, und daß die Abdeckkappe (42) über jeweils einen Vielflach (44, 46, 48) im wesentlichen drehfest mit dem Handrad (12), der Gewindebuchse (32) und der Gewindebuchse (36) verbunden ist, die entsprechende Vielflache (74 bzw. 56 bzw. 58) aufweisen.

5. Handantrieb nach einem der vorhergehenden Ansprüche, **dadurch gekennzeichnet, daß** das Handrad (12) drehfest mit einer in einem Ventilgehäuse (14) gehaltenen Gewindebuchse (22) verbunden ist, die über ein Gewinde mit der Gewindespindel (18) gekoppelt ist, und daß das Handrad (12) zwischen dem Ventilgehäuse (14) und der Gewindebuchse (22) axial fixiert ist.

6. Handantrieb nach einem der vorhergehenden Ansprüche, **dadurch gekennzeichnet, daß** mit der Gewindespindel (18) eine Sichtanzeige (20) fest verbunden ist, und daß der Bund (40) der Gewindespindel (18) an der Sichtanzeige (20) ausgebildet ist.

7. Handantrieb nach einem der vorhergehenden Ansprüche, **dadurch gekennzeichnet, daß** die Einrichtung zur Begrenzung der Schließposition der Gewindespindel in der Einrichtung zur Begrenzung des Hubes der Gewindespindel (18) angeordnet ist.

## Claims

1. Manual actuator to open and close an isolation device, especially a membrane valve, with a handwheel (12) and a threaded spindle (18) that is coupled to a valve element (16) and can be moved axially by the handwheel, **characterized in that** the handwheel (12) is equipped with a device to limit the closure position of the threaded spindle (18) and/or of the valve element (16), comprising an intemal screw thread (66) on the handwheel, into which is screwed in an axially repositionable manner a threaded bush (32) equipped with a radial collar (34), and moreover (comprising) a radial collar (40) on the threaded spindle (18) against which the collar (34) of the threaded bush (32) can come to rest axially to limit the closure position of the valve element (16).

2. Manual actuator according to Claim 1, **characterized in that** the handwheel (12) is equipped with a device to limit the stroke of the threaded spindle (18) and/or of the valve element (16).

3. Manual actuator according to Claim 1 and 2, **characterized in that** the threaded bush (32) is equipped with an internal screw thread (70) into which is screwed, in an axially repositionable manner, a threaded bush (36) having a radial collar (38) against which the collar (40) of the threaded spindle (18) can come to a stop to limit the stroke of the valve element (16).

4. Manual actuator according to one of the foregoing Claims, **characterized in that** the handwheel (12) is equipped with a cover cap (42) for the threaded bushes (32, 36) and **in that** the cover cap (42) is connected in an essentially rotationally fixed manner, via a polyhedron (44, 46, 48) in each case, to the handwheel (12), the threaded bush (32) and the threaded bush (36), which have the corresponding polyhedra (74, 56 and 58 respectively).

5. Manual actuator according to one of the foregoing Claims, **characterized in that** the handwheel (12) is connected in a rotationally fixed manner to a threaded bush (22), held in a valve housing (14), that is coupled via a screw thread to the threaded spindle (18), and **in that** the handwheel (12) is axially fixed between the valve housing (14) and the threaded bush (22).

6. Manual actuator according to one of the foregoing Claims, **characterized in that** a visual indicator (20) is rigidly attached to the threaded spindle (18) and **in that** the collar (40) of the threaded spindle (18) is constructed on the visual indicator (20).

7. Manual actuator according to one of the foregoing Claims, **characterized in that** the device to limit the closure position of the threaded spindle is arranged in the device to limit the stroke of the threaded spindle (18).

## Revendications

1. Commande manuelle pour ouvrir et fermer un organe d'arrêt, notamment une soupape à diaphragme, comprenant un volant (12) et une broche filetée (18) couplée à un élément de soupape (16) et déplaçable axialement grâce au volant (12), **caractérisée en ce que** le volant (12) est équipé d'un dispositif de limitation de la position de fermeture de la broche filetée (18), à savoir de l'élément de soupape (16), dispositif qui comprend un filet femelle (66) au niveau du volant, dans lequel est vissée, de manière axialement réglable, une douille taraudée (32) pourvue d'un collet radial (34), ainsi qu'un collet radial (40) au niveau de la broche filetée (18), contre lequel le collet (34) de la douille taraudée (32) peut buter axialement pour limiter la position de fermeture de l'élément de soupape (16).

2. Commande manuelle selon la revendication 1, **caractérisée en ce que** le volant (12) est équipé d'un dispositif de limitation de la course de la broche filetée (18) ou de l'élément de soupape (16).

3. Commande manuelle selon la revendication 1 et 2, **caractérisée en ce que** la douille taraudée (32) est pourvue d'un filet femelle (70) dans lequel est vissée, de manière axialement réglable, une douille taraudée (36), qui présente un collet radial (38), contre lequel le collet (40) de la broche filetée (18) peut buter axialement pour limiter la course de l'élément de soupape (16).

4. Commande manuelle selon l'une des revendications précédentes, **caractérisée en ce que** le volant (12) est pourvu d'un capot (42) pour les douilles taraudées (32, 36) et **en ce que**, respectivement au moyen d'un polyèdre (44, 46, 48), le capot (42) est relié essentiellement de manière résistante à la torsion au volant (12), à la douille taraudée (32) et à la douille taraudée (36), qui présentent des polyèdres (74 ou 56 ou 58) correspondants.

5. Commande manuelle selon l'une des revendications précédentes, **caractérisée en ce que** le volant (12) est relié, de manière résistante à la torsion, à une douille taraudée (22) maintenue dans une cage de soupape (14) et couplée à la broche filetée (18) via un filet et **en ce que** le volant (12) est fixé axialement entre la cage de soupape (14) et la douille taraudée (22).

6. Commande manuelle selon l'une des revendications précédentes, **caractérisée en ce qu'**un écran d'affichage (20) est relié de manière fixe à la broche filetée (18) et **en ce que** le collet (40) de la broche filetée (18) est réalisé au niveau de l'écran d'affichage (20).

7. Commande manuelle selon l'une des revendications précédentes, **caractérisée en ce que** le dispositif de limitation de la position de fermeture de la broche filetée est disposé dans le dispositif de limitation de la course de la broche filetée (18).
